# EUROPEAN PATENT APPLICATION

(11) **EP 4 516 195 A1**
(43) Date of publication of application: **05.03.2025**
(21) Application number: 23822934.8
(22) Date of filing: 31.05.2023
(51) Int. Cl.: A47L 15/14

(54) **WASHING APPARATUS**

(30) Priority: 14.06.2022 CN 202221486858 U
(71) Applicant: Foshan Shunde Midea Washing Appliances Manufacturing Co., Ltd., Foshan, Guangdong 528311 (CN)
(72) Inventor: LIU, Shanshan, Foshan, Guangdong 528311 (CN); LIU, Richao, Foshan, Guangdong 528311 (CN); ZHANG, Yaohua, Foshan, Guangdong 528311 (CN); LI, Ruisong, Foshan, Guangdong 528311 (CN)
(74) Representative: Ran, Handong
(86) International application number: PCT/CN2023/097584
(87) International publication number: WO 2023/241364

(57) **Abstract**

A washing apparatus, comprising a housing (100), a washing system (200), and a heat pump system (300). The housing (100) comprises a base (110) and an upper housing (120) arranged above the base (110), the upper housing (120) being movably connected to the base (110); the washing system (200) is arranged on the upper housing (120), and the washing system (200) is provided with a washing pipeline (210); and the heat pump system (300) comprises a refrigerant circulation loop, which is formed by means of sequentially connecting a compressor (310), a condenser (320), a throttling device (330) and an evaporator (340), the condenser (320) being arranged on the upper housing (120) for heating the washing pipeline (210). Since the washing apparatus will not bend or stretch the washing pipeline (210), there is no need to reserve an extra allowance for the washing pipeline (210), such that the phenomenon of waste liquid being left over due to the excessive length of the washing pipeline (210) is avoided, and therefore bacterial pollution is prevented and the safety of the washing apparatus is improved.

## Description

### FIELD

The invention relates to the field of household appliance technologies, and more particularly, to a washing apparatus.

### BACKGROUND

With the improvement of people's living standards, washing apparatuses such as a dishwasher are increasingly favored by people. During dish washing, the dishwasher usually needs to heat a washing liquid to rinse dishes with the washing liquid heated to a high temperature, improving a washing efficiency and cleaning effectiveness.

In the related art, the dishwasher employs a heat pump system to heat the washing liquid. A machine shell is divided into an upper part and a lower part. The entire heat pump system is disposed at the lower part of the machine shell, and is connected to a washing waterway system disposed at the upper part of the machine shell by a condenser disposed at the lower part to realize heating of the washing liquid. In the related art, maintenance of the heat pump system is achieved through opening the upper part of the machine shell. However, since the upper part and the lower part need to be opened or closed, a sufficient margin needs to be ensured for a washing tube connected between the upper part and the lower part. As a result, a waste liquid is likely to accumulate in the washing tube, which causes bacterial contamination and affects a cleaning effect.

### SUMMARY

A main objective of the invention is to provide a washing apparatus, which aims to avoid bacterial contamination caused by a waste liquid accumulated in a washing tube to improve a washing effect of the washing apparatus.

To achieve the above objective, the invention provides a washing apparatus. The washing apparatus includes a shell, a washing system, and a heat pump system. The shell includes a base and an upper housing disposed above the base, and the upper housing is movably connected to the base. The washing system is disposed at the upper housing, and has a washing tube. The heat pump system includes a refrigerant circulation loop formed by a compressor, a condenser, a throttling device, and an evaporator that are in communication with one another sequentially. The condenser is disposed at the upper housing for heating the washing tube.

In an embodiment of the invention, each of the compressor, the throttling device, and the evaporator may be disposed at the base. The condenser may be connected to each of the compressor and the throttling device by a refrigerant hose.

In an embodiment of the invention, the washing system may include a water cup and a washing pump. The water cup may be disposed at the upper housing, and the water cup has a water outlet end in communication with the washing tube. The washing pump may be disposed at the upper housing. The washing pump may have a water inlet end in communication with the washing tube and a water outlet end in communication with a water inlet end of the water cup. In a fluid flow direction, the condenser may be disposed at the washing tube between the water outlet end of the water cup and the water inlet end of the washing pump.

In an embodiment of the invention, the condenser may be connected to the washing tube in a tube-in-sleeve manner.

In an embodiment of the invention, the washing tube may be provided with a first cylinder for circulating a washing liquid. The condenser may include a first heat exchange tube disposed in the first cylinder.

In an embodiment of the invention, the first heat exchange tube located in the first cylinder may be in a bent shape or a spiral shape.

In an embodiment of the invention, the upper housing may be connected to the base in a reversible manner.

In an embodiment of the invention, the shell may be provided with a hinge or a pivot bar. The upper housing may be connected to the base by the hinge or the pivot bar in the reversible manner.

In an embodiment of the invention, the shell may have a front side and a rear side opposite to the front side. The hinge or the pivot bar may be disposed at the rear side of the shell.

In an embodiment of the invention, the upper housing may be operatable at a closed position where the upper housing covers the base and an open position where the upper housing is pivoted backwards relative to the base to expose an upper surface of the base.

In an embodiment of the invention, the upper housing may be provided with a protrusion at a rear side of the upper housing. The protrusion may be flush with a lower surface of the base in the open position.

In an embodiment of the invention, the washing apparatus may be a dishwasher or a washing machine.

In the washing apparatus according to the technical solutions of the invention, the shell includes the base and the upper housing. The upper housing is movably mounted above the base. The upper housing is provided with the washing system having a washing tube capable of washing items to be washed. With the heat pump system, the washing tube is heated by the condenser of the heat pump system, which realizes a function of high-temperature washing in the washing apparatus, improving a washing efficiency. In this embodiment, by arranging the condenser at the upper housing, the washing tube and the condenser can move together with the upper housing without bending, stretching, or otherwise deforming the washing tube. In this way, a need to reserve a margin for the washing tube is eliminated, which avoids an accumulation of a waste liquid due to an excessive length of the washing tube. Therefore, bacterial contamination is prevented, improving safety of the washing apparatus.

### BRIEF DESCRIPTION OF THE DRAWINGS

In order to clearly explain technical solutions of embodiments of the invention or in the related art, drawings used in the description of the embodiments or related art are briefly described below. The drawings as described below are merely some embodiments of the invention. Based on structures illustrated in these drawings, other drawings can be obtained by those of ordinary skill in the art without creative effort.
FIG. 1 is a schematic structural view of a washing apparatus according to an embodiment of the invention.
FIG. 2 is a schematic structural view of a connection between a condenser and a washing tube in the embodiment of FIG. 1.
FIG. 3 is a schematic structural view of a washing apparatus at an open position according to an embodiment of the invention.
FIG. 4 is a schematic structural view of a washing apparatus at a closed position according to an embodiment of the invention.

Description of reference numerals of the accompanying drawings:

| Reference Numeral | Name | Reference Numeral | Name |
|---|---|---|---|
| 100 | shell | 230 | washing pump |
| 110 | base | 300 | heat pump system |
| 120 | upper housing | 310 | compressor |
| 121 | protrusion | 320 | condenser |
| 130 | hinge | 321 | first heat exchange tube |
| 200 | washing system | 330 | throttling device |
| 210 | washing tube | 340 | evaporator |
| 211 | first cylinder | 350 | refrigerant hose |
| 220 | water cup | | |

The realization of objectives, functional features, and advantages of the invention will be further described in conjunction with embodiments and with reference to the accompanying drawings.

### DETAILED DESCRIPTION OF THE EMBODIMENTS

Technical solutions according to embodiments of the invention will be described clearly and completely below in combination with accompanying drawings of the embodiments of the invention. The embodiments described below are only a part of the embodiments of the invention, rather than all embodiments of the invention. On a basis of the embodiments of the invention, all other embodiments obtained by those of ordinary skill in the art without creative labor shall fall within the scope of the invention.

It should be noted that if there are directional indications (such as up, down, left, right, front, rear, etc.) involved in the embodiments of the invention, the directional indications are only used to explain relative positions between various components, movements of various components, or the like under a predetermined posture (as illustrated in the figures). When the predetermined posture changes, the directional indications also change accordingly.

In addition, in the embodiments of the invention, if there are descriptions associated with "first", "second", or the like involved in the embodiments of the invention, the descriptions associated with "first", "second", or the like are only used for descriptive purposes, and cannot be understood as indicating or implying relative importance or implicitly indicating the number of indicated technical features. Therefore, the features associated with "first" and "second" may explicitly or implicitly include at least one of the features. Further, combinations can be performed on the technical solutions according to various embodiments, but these combinations must be based on the fact that they can be realized by those skilled in the art. When a combination of the technical solutions is contradictory or unattainable, the combination of the technical solutions neither exists nor falls within the protection scope of the appended claims of the invention.

The invention provides a washing apparatus, which aims at avoiding bacterial contamination caused by a waste liquid accumulated in the washing tube by improving a position of a connection between a condenser and a washing tube in a heat pump system, improving a washing effect of the washing apparatus. It should be understood that the washing apparatus may be a dishwasher or a washing machine.

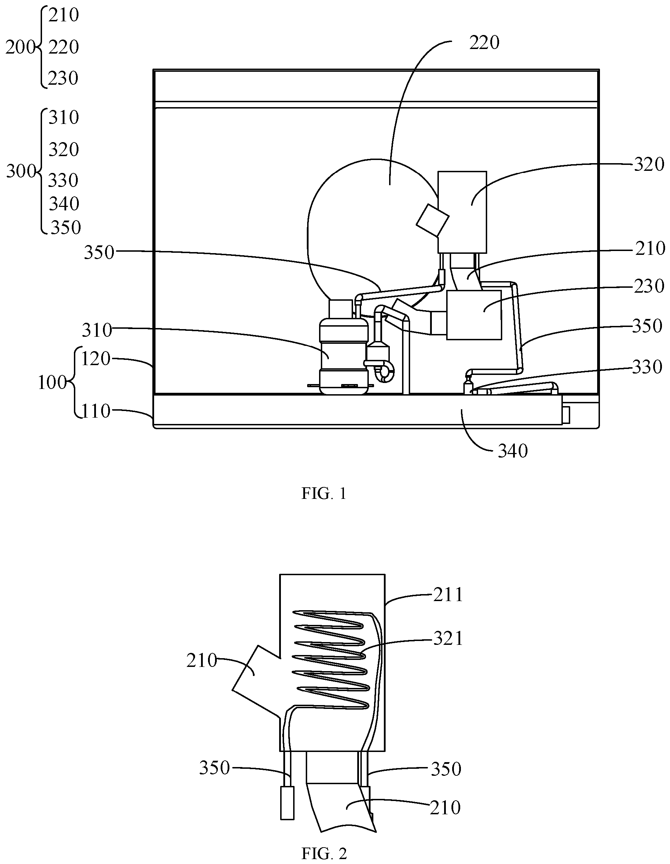

In the embodiments of the invention, as illustrated in FIG. 1 to FIG. 4, the washing apparatus includes a shell 100, a washing system 200, and a heat pump system 300.

The shell 100 includes a base 110 and an upper housing 120 disposed above the base 110. The upper housing 120 is movably connected to the base 110. The washing system 200 is disposed at the upper housing 120 and has a washing tube 210. The heat pump system 300 includes a refrigerant circulation loop formed by a compressor 310, a condenser 320, a throttling device 330, and an evaporator 340 that are in communication with one another sequentially. The condenser 320 is disposed at the upper housing 120 for heating the washing tube 210.

The shell 100 includes the base 110 and the upper housing 120 movably disposed above the base 110, in such a manner that the upper housing 120 can move relative to the base 110 to expose or cover the base 110. The washing system 200 is disposed at the upper housing 120. It should be understood that the upper housing 120 has a washing cavity for washing items to be washed. The washing tube 210 of the washing system 200 is in communication with the washing cavity to enable washing of the items to be washed. The heat pump system 300 includes the refrigerant circulation loop formed by the compressor 310, the condenser 320, the throttling device 330, and the evaporator 340 that are in communication with one another sequentially 340. During an operation of the heat pump system 300, the condenser 320 can release heat to an outside. In this case, the condenser 320 heats the washing liquid in the washing tube 210, which realizes high-temperature washing in the washing apparatus, improving a washing efficiency. In this embodiment, by arranging the condenser 320 at the upper housing 120, the condenser 320 and the washing tube 210 are both located at the upper shell 120, in such a manner that the washing tube 210 does not need to reserve a length margin for connecting the upper housing 120 and the base 110. In this way, a length of the washing tube 210 can be reduced, which avoids an accumulation of the waste liquid due to an excessive length of the washing tube 210. Therefore, bacterial contamination is prevented, improving safety of the washing apparatus.

It should be understood that, by dividing the shell 100 into the base 110 and the upper housing 120, the base 110 functions a bottom support. The upper housing 120 covers the base 110 to form a complete and relatively closed structure with the base 110, in such a manner that each component in the washing apparatus can be wrapped by the shell 100, which ensures safety and cleanliness of each component in the washing apparatus. The heat pump system 300 is disposed in the housing 100. The condenser 320 is disposed at the upper housing 120. In this way, when the upper housing 120 is moved relative to the base 110 to be at least partially separated from the base 110, components at the base 110 and/or the upper housing 120 can be exposed to facilitate maintenance by a user or a maintenance operator. In an exemplary embodiment, the upper housing 120 may be connected to the base 110 in a reversible manner or be slideably connected to the base 110.

It should be noted that, a heat exchange connection between the condenser 320 and the washing tube 210 may be a tube-wall contact connection between the condenser 320 and the washing tube 210, a tube-in-sleeve connection between the condenser 320 and the washing tube 210, or an indirect heat exchange connection between the condenser 320 and the washing tube 210 via a heat exchange medium. An exemplary heat exchange connection method may be determined as desired, and thus no specific limitations are imposed here.

Since the washing tube 210 and the condenser 320 are both located at the upper housing 120, the washing tube 210 and the condenser 320 move with the upper housing 120 when the upper housing 120 moves relative to the base 110, without bending, stretching, or otherwise deforming the washing tube 210. In this way, a need to reserve a margin for the washing tube 210 is eliminated, which avoids the accumulation of the waste liquid in the washing tube 210.

In an exemplary embodiment, the washing tube 210 may be a hose or a rigid tube.

In an actual application, an exemplary mounting arrangement of the heat pump system 300 may be determined as desired. For example, the heat pump system may be located at the upper housing 120. In an exemplary embodiment, the condenser 320 may be located at the upper housing 120, while the compressor 310, the throttling device 330, and the evaporator 340 may be located at the base 110. In this case, the condenser 320 is connected to each of the compressor 310 and the throttling device 330 by a refrigerant hose 350. Alternatively, the throttling device 330 and the condenser 320 may be located at the upper housing 120, while the compressor 310 and the evaporator 340 may be located at the base 110. In this case, the condenser 320 is connected to the compressor 310 by the refrigerant hose 350, and the throttling device 330 is connected to the evaporator 340 by the refrigerant hose 350. Alternatively, the throttling device 330, the condenser 320, and the compressor 310 may be located at the upper housing 120, while the evaporator 340 may be located at the base. In this case, the throttling device 330 is connected to the evaporator 340 by the refrigerant hose 350, and the evaporator 340 is connected to the compressor 310 by the refrigerant hose 350. Therefore, connection ports of components of the heat pump system 300 that are located at the upper housing 120 and the base 110 may be connected by the refrigerant hoses 350.

In the washing apparatus according to the technical solutions of the invention, the shell 100 includes the base 110 and the upper housing 120. The upper housing 120 is movably mounted above the base 110. The upper housing 120 is provided with the washing system 200 having the washing tube 210 capable of washing the items to be washed. With the heat pump system 300, the washing tube 210 is heated by the condenser 320 of the heat pump system 300, which realizes the high-temperature washing in the washing apparatus, improving the washing efficiency. In this embodiment, by arranging the condenser 320 at the upper housing 120, the washing tube 210 and the condenser 320 can move together with the upper housing 120, without bending, stretching, or otherwise deforming the washing tube 210. In this way, the need to reserve the margin for the washing tube 210 is eliminated, which avoids the accumulation of the waste liquid due to the excessive length of the washing tube 210. Therefore, the bacterial contamination is prevented, improving the safety of the washing apparatus.

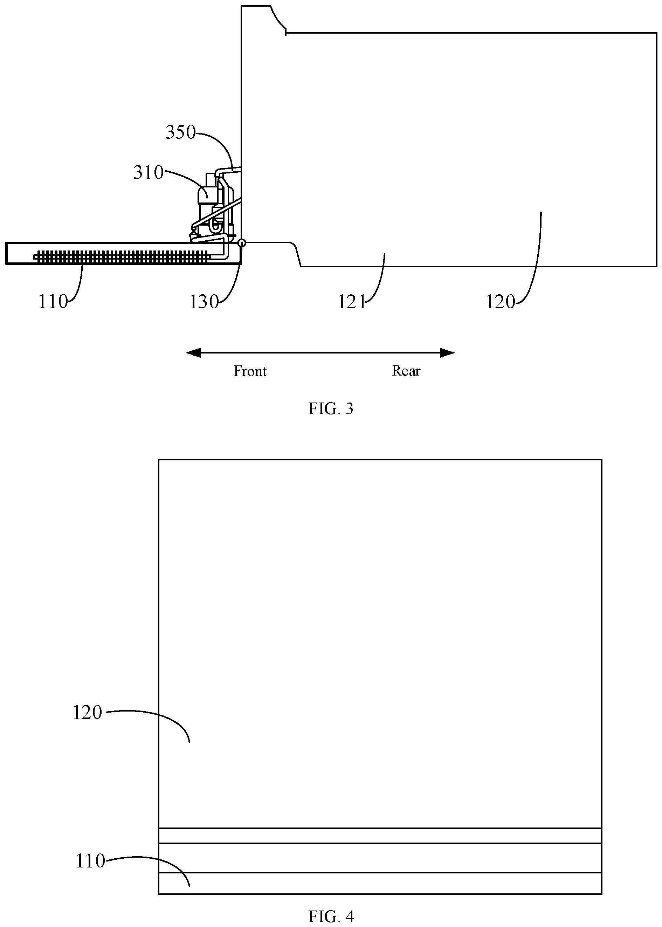

In an embodiment of the invention, as illustrated in FIG. 1 and FIG. 3, each of the compressor 310, the throttling device 330, and the evaporator 340 is disposed at the base 110. The condenser 320 is connected to each of the compressor 310 and the throttling device 330 by the refrigerant hose 350.

In this embodiment, structures in the heat pump system 200 other than the condenser 320 are all disposed at the base 110. The condenser 320 and the compressor 310 are connected by the refrigerant hose 350. The condenser 320 and the throttling device 330 are connected by the refrigerant hose 350. In this way, the refrigerant circulation loop is formed by connecting the compressor 310, the condenser 320, the throttling device330, and the evaporator 340 sequentially. By arranging each of the compressor 310, the throttling device 330, and the evaporator 340 at the base 110, an overall weight of the components disposed at the upper housing 120 is reduced. In this way, a force for driving the upper housing 120 to move relative to the base 110 is further reduced. Further, stability of movements of the upper housing 120 and the components at the upper housing 120 is improved.

Through connecting the upper housing 120 to heat pump components at the base 110 by the refrigerant hose 350, the refrigerant hose 350 can be bent or stretched during a movement of the upper housing 120, without affecting flow of a refrigerant. Therefore, a normal operation of the heat pump system 300 is not affected. Also, since the refrigerant circulation loop is closed, no technical problem such as the accumulation of the waste liquid in the refrigerant hose 350 exists.

In an embodiment of the invention, as illustrated in FIG. 1 and FIG. 3, the washing system 200 includes a water cup 220 and a washing pump 230. The water cup 220 is disposed at the upper housing 120 and has a water outlet end in communication with the washing tube 210. The washing pump 230 is disposed at the upper housing 120. The washing pump 230 has a water inlet end in communication with the washing tube 210 and a water outlet end in communication with a water inlet end of the water cup 220. In a fluid flow direction, the condenser 320 is disposed at the washing tube 210 between the water outlet end of the water cup 220 and the water inlet end of the washing pump 230.

In this embodiment, the water cup 220 is disposed at the upper housing 120 to provide the washing liquid for the washing cavity in the upper housing 120. The water outlet end of the water cup 220 is in communication with the washing tube 210. The water inlet end of the washing pump 230 is in communication with the washing tube 210. The water outlet end of the washing pump 230 is in communication with the water inlet end of the water cup 220. Also, the condenser 320 is located at the washing tube 210 between the water cup 220 and the washing pump 230. In this way, when being driven by the washing pump 230, the washing liquid in the water cup 220 passes through the condenser 320 and is heated by the condenser 320, flows back into the water cup 220 through the washing pump 230, and then is transported from the water cup 220 into the washing cavity, achieving medium and high temperature rinsing.

In an embodiment of the invention, as illustrated in FIG. 1 and FIG.2, the condenser 320 is connected to the washing tube 210 in a tube-in-sleeve manner.

It should be understood that the condenser 320 includes a first heat exchange tube 321 for circulating the refrigerant. To improve a heating efficiency for the washing liquid, the first heat exchange tube 321 may be sheathed on the washing tube 210, or the washing tube 210 may be sheathed on the first heat exchange tube 321. In this way, the refrigerant in the first heat exchange tube 321 and the washing liquid in the washing tube 210 can fully exchange heat with each other to achieve a better heating effect.

In this embodiment, to further improve the heating efficiency, the washing tube 210 is provided with a first cylinder 211 for circulating the washing liquid. The first heat exchange tube 321 is disposed in the first cylinder 211. In this case, the first heat exchange tube 321 is immersed in the washing liquid, which increases a contact area between the condenser 320 and the washing liquid, increasing a heat exchange efficiency.

Alternatively, the first heat exchange tube 321 located in the first cylinder 211 is in a bent shape or a spiral shape. In this way, a heat exchange area between the condenser 320 and the washing liquid is further increased, which further improves the heat exchange efficiency, enhancing the heating efficiency.

In an embodiment of the invention, as illustrated in FIG. 1 to FIG. 4, the upper housing 120 is connected to the base 110 in the reversible manner.

It should be understood that the phase "the upper housing 120 being connected to the base 110 in a reversible manner" may mean that the upper housing 120 is hinged to or pivotally connected to the base 110. The upper housing 120 may be pivoted relative to the base 110 to expose or cover the base 110, in such a manner that the maintenance of the components in the washing apparatus by the user is facilitated.

In an actual application, a hinge 130 may be disposed at the housing 100. The upper housing 120 and the base 110 are moved by the hinge 130 in the reversible manner. Alternatively, the hinge 130 may be disposed at a front side, a rear side, a left side, or a right side of the shell 100. In this way, the upper housing 120 can be pivoted to the front side, the rear side, the left side, or the right side relative to the base 110 by the user, to expose an upper surface of the base 110 for maintenance of an internal structure.

In an embodiment, the shell 100 has the front side and the rear side opposite to the front side. The hinge 130 is disposed at the rear side of the shell 100. In this embodiment, the upper housing 120 has the washing cavity. The upper housing 120 is provided with a door at the front side of the shell 100, which facilitates opening the washing cavity for the user to access and place items in the washing cavity. The hinge 130 is disposed at the rear side of the shell 100. In this way, when the maintenance is required, the upper housing 120 can be pivoted to the front side relative to the base 110 by the user to expose a bottom of the upper housing 120 and an upper part of the base 110. Therefore, the maintenance by the user is facilitated.

In an actual application, the hinge 130 may be mounted at a rear side edge of the base 110. A pivot shaft of the hinge 130 may extend along the rear side edge of the base 110. In this way, reliability of pivoting the upper housing 120 relative to the base 110 is ensured.

Specifically, the upper housing 120 is operable at a closed position where the upper housing 120 covers the base 110 and an open position where the upper housing 120 is pivoted backwards relative to the base 110 to expose an upper surface of the base 110.

It should be understood that in the closed position, the washing apparatus is in a normal state, such as an operation state or a standby state. In the open position, the washing apparatus is in a maintenance state and the upper housing 120 is pivoted backwards relative to the base 110, in such a manner that the condenser 320, the washing pump 230, the washing tube 210, and other components at the upper housing 120 are exposed. In addition, the compressor 310, the throttling device 330, the evaporator 340, and other components at the base 110 are also exposed. In this way, overhaul and maintenance by the user are further facilitated.

Further, as illustrated in FIG. 3, the upper housing 120 is provided with a protrusion 121 at a rear side of the upper housing 120. The protrusion 121 is flush with a lower surface of the base 110 in the open position.

In this embodiment, by arranging the protrusion 121 at the rear side of the upper housing 120, the protrusion 121 provides support for the upper housing 120 at the open position. Also, the protrusion 121 is arranged to be flush with the lower surface of the base 110, which increases a contact area between the washing apparatus and a placement surface (such as a table top or a floor) at the open position, further enhancing structural stability.

Although some embodiments of the invention are described above, the scope of the invention is not limited to these embodiments. Within the concept of the invention, any equivalent structure transformation made using the contents of the specification and the accompanying drawings, or any direct or indirect application of the contents of the specification and the accompanying drawings in other related fields, shall equally fall within the scope of the invention.

## Claims

1. A washing apparatus, comprising:
a shell comprising a base and an upper housing disposed above the base, the upper housing movably connected to the base;
a washing system disposed at the upper housing and having a washing tube; and
a heat pump system comprising a refrigerant circulation loop formed by a compressor, a condenser, a throttling device, and an evaporator that are in communication with one another sequentially, the condenser disposed at the upper housing for heating the washing tube.

2. The washing apparatus according to claim 1, wherein each of the compressor, the throttling device, and the evaporator is disposed at the base, and the condenser is connected to each of the compressor and the throttling device by a refrigerant hose.

3. The washing apparatus according to claim 2, wherein the washing system comprises:
a water cup disposed at the upper housing, the water cup having a water outlet end in communication with the washing tube; and
a washing pump disposed at the upper housing, the washing pump having a water inlet end in communication with the washing tube and a water outlet end in communication with a water inlet end of the water cup,
wherein in a fluid flow direction, the condenser is disposed at the washing tube between the water outlet end of the water cup and the water inlet end of the washing pump.

4. The washing apparatus according to claim 3, wherein the condenser is connected to the washing tube in a tube-in-sleeve manner.

5. The washing apparatus according to claim 4, wherein:
the washing tube is provided with a first cylinder for circulating a washing liquid; and
the condenser comprises a first heat exchange tube disposed in the first cylinder.

6. The washing apparatus according to claim 5, wherein the first heat exchange tube located in the first cylinder is in a bent shape or a spiral shape.

7. The washing apparatus according to any one of claims 1 to 6, wherein the upper housing is connected to the base in a reversible manner.

8. The washing apparatus according to claim 7, wherein the shell is provided with a hinge or a pivot bar, and the upper housing is connected to the base by the hinge or the pivot bar in the reversible manner.

9. The washing apparatus according to claim 8, wherein the shell has a front side and a rear side opposite to the front side, and the hinge or the pivot bar is disposed at the rear side of the shell.

10. The washing apparatus according to claim 9, wherein the upper housing is operatable at a closed position where the upper housing covers the base and an open position where the upper housing is pivoted backwards relative to the base to expose an upper surface of the base.

11. The washing apparatus according to claim 10, wherein the upper housing is provided with a protrusion at a rear side of the upper housing, and the protrusion is flush with a lower surface of the base in the open position.

12. The washing apparatus according to any one of claims 1 to 11, wherein the washing apparatus is a dishwasher or a washing machine.
